## Europäisches Patentamt

## European Patent Office

## Office européen des brevets

(19)

(11) Publication number: **0 123 355 B1**

(12) **EUROPEAN PATENT SPECIFICATION**

(45) Date of publication of patent specification: **12.08.87**

(21) Application number: **84200536.5**

(22) Date of filing: **16.04.84**

(51) Int. Cl.⁴: **B 03 B 9/06,** B 07 B 9/00, D 21 B 1/02, B 29 B 17/00

(54) **Method of separating domestic waste.**

(30) Priority: **21.04.83 NL 8301400**

(43) Date of publication of application: **31.10.84 Bulletin 84/44**

(45) Publication of the grant of the patent: **12.08.87 Bulletin 87/33**

(84) Designated Contracting States: **AT BE CH DE FR GB IT LI LU NL SE**

(56) References cited:
FR-A-2 263 821
FR-A-2 377 238
FR-A-2 430 797
GB-A-2 087 757
US-A-4 160 722

DE INGENIEUR, vol. 86, no. 7, 14th February 1974, pages 131-133, Den Haag, NL; F.J.COLON: "Het TNO-scheidingssysteem voor huishoudelijk afval"

(73) Proprietor: **ESMIL B.V.**
**De Boelelaan 7 P.O. Box 7811**
**NL-1008 AA Amsterdam (NL)**

(72) Inventor: **Goedhart, Cornelis**
**Nijhofflaan 46**
**Uithoorn (NL)**

(74) Representative: **Wentzel, Hendrik Cornelis et al**
**Hoogovens Groep B.V. P.O. Box 10.000**
**NL-1970 CA IJmuiden (NL)**

## Description

The invention relates to a method of separating domestic waste, comprising the steps of shredding waste, separating the shredded waste in a first wind sifter into a heavy fraction and a light fraction which comprises mainly paper, plastics sheet and organic material, screening the light fraction so as to obtain a through-flow mainly comprising organic material and an overflow mainly comprising paper and plastics sheet, and separating the overflow in a second wind sifter into a heavy fraction comprising mainly paper and a light fraction comprising mainly plastics sheet.

The method described above is disclosed in "De Ingenieur", Vol. 86, 1974, pp 131—133. In this method, the most important products of separation are a paper fraction, a plastics sheet fraction and the organic material which is extracted from the light fraction from the first sifter. This method is however primarily directed at recovering a paper fraction for re-use in paper industry. In particular, the organic material is first screened from the light fraction by a rotary screen, and then the remaining mixture of paper and plastics sheet is separated in a second sifter. The paper fraction thus obtained can then either be pulped in or for a paper mill, or can be dried and pressed into bales. The plastics sheet fraction is still considerably contaminated with paper.

At present the possibilities of selling the recovered paper fraction to the paper industry are only slight, but the possibility of commercial disposal of the recovered plastics sheet fraction is good. An alternative possible use for the recovered paper fraction is as a fuel.

An object of the invention is to provide an improved separation method by which a clean plastics fraction can be obtained and by which preferably a fuel with a high calorific value can be obtained also.

According to the invention, in the method described initially, the light fraction from the first wind sifter is screened on a coarse screen having a screen opening size smaller than the average dimension of the plastics sheet in the waste after shredding, so that the throughflow mainly comprises organic material and smaller pieces of paper and the overflow comprises mainly plastics sheet and larger pieces of paper and cardboard, and after separation of the overflow from the coarse screen in the second wind sifter into a heavy fraction comprising mainly larger pieces of paper and cardboard and a light fraction comprising mainly plastics sheet contaminated with light paper, the light fraction from the second wind sifter is wetted and then cleaned in a plastics after-separator so as to provide a first fraction which contains clean plastics sheet and second fraction which contains wet paper fibres.

The screen opening size of the coarse screen should preferably be in the range 30—80 mm, more preferably in the range 40—50 mm. A good result may be achieved if the coarse screen is a shaking screen (also called an oscillating or reciprocating screen). In this way, an overflow of 15 to 35% of the screen feed can be obtained which contains 60 to 80% of the quantity of plastics sheet in the screen feed, larger pieces of light paper, heavy cardboard and textile material. This mixture is separated in the second wind sifter. The light fraction obtained in the second wind sifter, comprising mainly plastics sheet, is contaminated with light paper and the heavy fraction, comprising mainly larger pieces of light paper and heavy cardboard, has a normal moisture content. To remove the light paper from the light fraction of the second wind sifter, this fraction is first wetted to a moisture content in the range 40—80% and subsequently cleaned in the plastics after-separator so that a plastics sheet fraction is for example obtained which consists of about 90% of polyolefin material (HPE, LPE and PP). This plastics fraction is, after washing and granulating, very suitable for re-use. It is for instance possible to blow plastic bags from it.

The throughflow from the coarse screen should preferably be separated on a fine screen into an overflow comprising mainly paper and a throughflow which is mainly organic. A satisfactory result is particularly obtained if the fine screen is a rotary screen. The organic material can be composted.

It is now commonplace for domestic waste to be burnt in an incinerator. A mixture especially favourable for this combustion is provided in the method of the invention if the heavy fraction from the first wind sifter is separated by screening into an inert fraction and a combustible fraction, and if the heavy fraction from the second sifter, and optionally the overflow from the above-mentioned fine screen (if provided) is added to the combustible fraction.

Compared with the unprocessed domestic waste, the mixture thus produced has a higher calorific value and a lower ash residue.

An embodiment of the invention will now be described by way of example with reference to the accompanying drawing, in which:—

Figure 1 is a schematic process diagram of the previously disclosed method discussed above, and

Figure 2 is a schematic process diagram of the method embodying the invention.

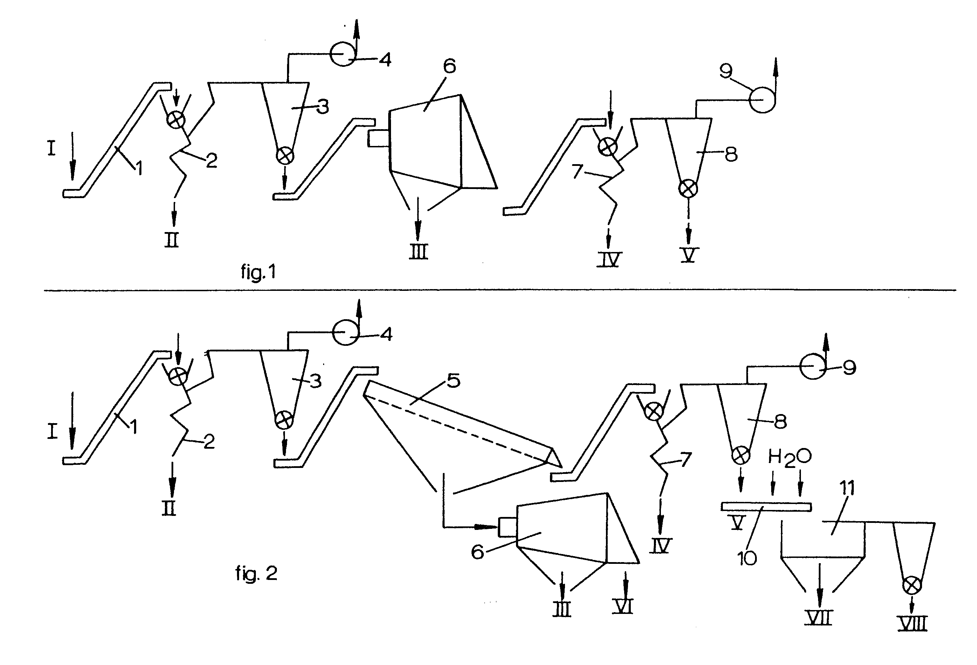

In Figures 1 and 2, the reference numbers indicate the following parts of the apparatus:

1   feed belt
2   first wind sifter
3   cyclone
4   fan
5   coarse screen (in Fig. 2 in the form of a shaking screen)
6   fine screen (in Fig. 2 in the form of a rotary screen)
7   second wind sifter
8   cyclone
9   fan
10  wetting device
11  plastics after-separator

As can be seen, not all these parts are present in Fig. 1, and their arrangement is different.

The feed flow and product flows are denoted by the following Roman numerals:

I   shredded domestic waste
II   heavy fraction from the first wind sifter (inert and combustible material)
III   organic material and fine inert material
IV   heavy fraction from second wind sifter (paper and cardboard)
V   plastics sheet fraction
VI   overflow from fine screen (paper fraction)
VII   paper fibres
VIII   clean plastics sheet

In the method of Figure 1, the light fraction from the first wind sifter 2, comprising mainly paper, plastics sheet and organic material, is separated in the rotary screen 6 into organic material and fine inert material (product flow III, throughflow) and into a mixture of paper and plastics sheet (overflow). This mixture is separated in the second wind sifter 7 into a plastics sheet fraction considerably contaminated with paper (product flow V) and paper and cardboard (product flow IV).

In the method of Figure 2, on the other hand, the light fraction from the first wind sifter 2 is separated in a coarse screen 5, which in this example is a shaking screen, into an overflow comprising mainly plastics sheet and larger pieces of paper and cardboard and a throughflow. The overflow is then separated in the second wind sifter 7 into a light fraction mainly consisting of plastics sheet and light paper and a heavy fraction consisting mainly of relatively dry paper and cardboard (product flow IV). The light fraction is then wetted in the wetting device 10 and finally cleaned in the plastics after-separator 11 to produce paper fibres (product flow VII) and very clean plastics sheet (product flow VIII).

The throughflow from the coarse screen 5 is separated in the fine screen 6, which in this example is a rotary screen, into organic and fine inert material (product flow III) and a paper fraction (product flow VI).

The heavy fraction (product flow II) from the first wind sifter 2 is separated by screening (not indicated in Figure 2) into inert material and combustible material. This combustible material is combined with the unwetted paper and cardboard (product flow IV) from the second wind sifter and the paper fraction (product flow VI), to produce a material useful as a fuel.

## Claims

1. Method of separating domestic waste, comprising the steps of shredding the waste, separating the shredded waste in a first wind sifter (2) into a heavy fraction (II) and a light fraction which comprises mainly paper, plastics sheet and organic material, screening the light fraction so as to obtain a throughflow mainly comprising organic material and an overflow mainly comprising paper and plastics sheet, and separating the overflow in a second wind sifter (7) into a heavy fraction (IV) comprising mainly paper and a light fraction comprising mainly plastics sheet, characterised in that the light fraction from the first wind sifter (2) is screened on a coarse screen (5) having a screen opening size smaller than the average dimension of the plastics sheet in the waste after shredding so that the throughflow mainly comprises organic material and smaller pieces of paper and the overflow comprises mainly plastic sheet and larger pieces of paper and cardboard, and in that after separation of the overflow from the coarse screen in the second wind sifter (7) into a heavy fraction (IV) comprising mainly larger pieces of paper and cardboard and a light fraction comprising mainly plastics sheet contaminated with light paper, this light fraction from the second wind sifter is wetted (10) and then cleaned in a plastics after-separator (11) so as to provide a first fraction (VIII) which contains clean plastics sheet and a second fraction (VII) which contains wet paper fibres.

2. Method according to claim 1 wherein the screen opening size of the coarse screen (5) is in the range 30—80 mm.

3. Method according to claim 2, wherein the screen opening size of the coarse screen (5) is in the range 40—50 mm.

4. Method according to any one of the preceding claims wherein the coarse screen (5) is a shaking screen.

5. Method according to any one of the preceding claims wherein the throughflow from the coarse screen (5) is separated on a fine screen (6) into an overflow comprising mainly paper (VI) and a throughflow (III) comprising mainly organic material.

6. Method according to claim 5 wherein the fine screen (6) is a rotary screen.

7. Method according to any one of the preceding claims wherein the heavy fraction (II) from the first wind sifter (2) is separated by screening into an inert fraction and a combustible fraction, and this combustible fraction is combined with the heavy fraction (IV) from the second wind sifter to form a fuel.

8. Method according to claim 7 as dependent on claim 6 or claim 7, wherein the said fuel also includes the overflow (VI) from the said fine screen (6).

## Patentansprüche

1. Verfahren zum Trennen von Hausmüll mit den Schritten Zerschnitzen des Mülls, Trennen des zerschnitzelten Mülls in einem ersten Windsichter (2) in eine schwere Fraktion (II) und eine leichte Fraktion, welche hauptsächlich Papier, Kunststofffolien und organisches Material enthält, Sieben der leichten Fraktion um einen hauptsächlich organischen Material enthaltenden Durchlauf und eine haupsächlich Papier und Kuststofffolien enthaltende Überlauf zu erhalten, und Trennen des Überlaufes in einem zweiten Windsichter (7) in eine schwere Fraktion (IV), die hauptsächlich Papier enthält, und eine leichte Fraktion, die hauptsächlich Kunststofffolien enthält, dadurch gekennzeichnet, daß die leichte Fraktion vom ersten Windsichter (2) auf einem Grobsieb (5) mit einer Sieböffnungsgröße kleiner als die Durchschnittsabmessung der Kuststoffolie im Abfall nach dem Zerschnitzeln gesiebt wird, sodaß der Durchlauf hauptsächlich organisches Material und kleinere Papierstücke enthält und der Überlauf hauptsächlich Kunststofffolien und größere Papier- und Kartonstücke enthält, und daß nach dem Trennen des Überlaufes von dem groben Sieb im zweiten Windsichter (7) in eine schwere Fraktion (IV), die hauptsächlich größere Papier- und Kartonstücke enthält, und eine leichte Fraktion, die hauptsächlich Kunststofffolie verunreinigt mit leichtem Papier enthält, diese leichte Fraktion vom zweiten Windsichter befeuchtet (10) und dann in einem Kuststoffnachabscheider (11) gereinigt wird, um eine erste Fraktion (VIII), welche reine Kunststofffolie enthält, und eine zweite Fraktion (VII) welche naße Papierfasern enthält, vorzusehen.

2. Verfahren gemäß Anspruch 1, wobei die Sieböffnungsgröße des Grobsiebes (5) im Bereich 30—80 mm liegt.

3. Verfahren gemäß Anspruch 2, wobei die Sieböffnungsgröße des Grobsiebes (5) im Bereich 40—50 mm liegt.

4. Verfahren gemäß irgendeinem der vorhergehenden Ansprüche, wobei das Grobsieb (5) ein Schüttelsieb ist.

5. Verfahren gemäß irgendeinem der vorhergehenden Ansprüche, wobei der Durchlauf vom Grobsieb (5) auf einem Feinsieb (6) in einem Überlauf, der hauptsächlich Papier (VI) enthält, und einen Durchlauf (III) der hauptsächlich organishes Material enthält, getrennt wird.

6. Verfahren gemäß Anspruch 5, wobei das Feinsieb (6) ein Rotationssieb ist.

7. Verfahren gemäß irgendeinem der vorhergehenden Ansprüche, wobei die schwere Fraktion (II) vom ersten Windsichter (2) durch Sieben in eine inerte Fraktion und eine brennbare Fraktion getrennt wird und diese brennbare Fraktion mit der schweren Fraktion (IV) vom zweiten Windsichter zur Bildung eines Brennstoffes verbunden wird.

8. Verfahren gemäß Anspruch 7 abhängig von Anspruch 6 oder Anspruch 7, wobei besagter Brennstoff auch den Überlauf (VI) von besagtem Feinsieb (6) einschließt.

**Revendications**

1. Procédé de triage des déchets domestiques, comprenant les opérations de dilacération des déchets, de triage des déchets dilacérés dans un premier séparateur (2) à air en une fraction lourde (II) et une fraction légère qui comprend principalement le papier, les feuilles de matière plastique et la matière organique, le criblage de la fraction légère afin d'obtenir un flux passant comprenant principalement de la matière organique et des refus comprenant principalement du papier et de la feuille de matière plastique, et le triage des refus dans un second séparateur (7) à air en une fraction lourde comprenant principalement du papier et une fraction légère comprenant principalement de la matière plastique en feuille, caractérisé en ce que

la fraction légère issue du premier séparateur (2) à air est criblée sur un crible (5) à gros trous ayant des ouvertures de dimensions plus petites que les dimensions moyennes de la matière plastique en feuille présente dans les déchets après la dilacération de façon que le flux passant comprenne principalement la matière organique et les morceaux de papier et de carton les plus petits et que les refus comprennent principalement la matière plastique et les morceaux de papier et de carton les plus gros, et en ce qu'après le triage des refus issus du crible à gros trous dans le second séparateur (7) à air en une fraction lourde (IV) comprenant principalement les morceaux de papier et de carton les plus gros et une fraction légère comprenant principalement la matière plastique en feuille contaminée par du papier léger, cette fraction légère issue du second séparateur à air est mouillée (10), puis nettoyée dans un post-séparateur (11) en matière plastique afin de réaliser une première fraction (VIII) qui contient de la matière plastique en feuille propre et une seconde fraction (VII) qui contient des fibres de papier humides.

2. Procédé selon la revendication 1, dans lequel les dimensions des ouvertures du crible (5) à gros trous sont comprises entre 30 et 80 mm.

3. Procédé selon la revendication 2, dans lequel les dimensions des ouvertures du crible (5) à gros trous sont comprises entre 40 et 50 mm.

4. Procédé selon l'une quelconque des revendications précédentes, dans lequel le crible (5) à gros trous est un crible à secousses.

5. Procédé selon l'une quelconque des revendications précédentes, dans lequel le flux passant issu du crible (5) à gros trous est trié sur un crible (6) à petits trous en refus comprenant principalement du papier (VI) et en flux passant (III) comprenant principalement de la matière organique.

6. Procédé selon la revendication 5, dans lequel le crible (6) à petits trous est un crible rotatif.

7. Procédé selon l'une quelconque des revendications précédentes dans lequel la fraction lourde (II) issue du premier séparateur (2) à air est triée par criblage en une fraction inerte et une fraction combustible, et cette fraction combustible est combinée avec la fraction lourde (IV) issue du second séparateur à air pour former un combustible.

8. Procédé selon la revendication 7 selon la revendication 6 ou la revendication 7, dans lequel ledit combustible comprend aussi les refus (VI) issus dudit crible (6) à petits trous.

fig.1

fig.2